# EUROPÄISCHE PATENTSCHRIFT

(11) **EP 2 285 677 B1**
(45) Veröffentlichungstag und Bekanntmachung des Hinweises auf die Patenterteilung: **27.03.2013**
(21) Anmeldenummer: 09745546.3
(22) Anmeldetag: 12.05.2009
(51) Int. Cl.: B64D 11/00

(54) **GEKÜHLTE FLUGZEUGPASSAGIER-SERVICEEINRICHTUNG**
CHILLED AIRCRAFT PASSENGER SERVICE DEVICE
DISPOSITIF RÉFRIGÉRÉ POUR LE SERVICE DE PASSAGERS D'UN AVION

(30) Priorität: 15.05.2008 DE 102008023636; 15.05.2008 US 53262
(43) Veröffentlichungstag der Anmeldung: 23.02.2011
(73) Patentinhaber: Airbus Operations GmbH, 21129 Hamburg (DE)
(72) Erfinder: SÖNMEZ, Kenan, 22527 Hamburg (DE); KERBER, Markus, 23858 Reinfeld (DE); BRAKHAN, Volker, 22763 Hamburg (DE)
(74) Vertreter: Schicker, Silvia
(86) Internationale Anmeldenummer: PCT/EP2009/003370
(87) Internationale Veröffentlichungsnummer: WO 2009/138212

(56) Entgegenhaltungen:
- EP-A- 0 655 593
- WO-A-2006/105049
- WO-A-2007/115830
- DE-A1- 19 952 524
- DE-A1-102005 043 610
- DE-A1-102006 013 143
- US-B1- 6 832 504

## Beschreibung

Die Erfindung betrifft eine Flugzeugpassagier-Serviceeinrichtung zur Aufnahme von zur Versorgung von Flugzeugpassagieren vorgesehenen kühl zu lagernden Gütern, wie z.B. Lebensmitteln und Getränken.

Gegenwärtig werden in modernen Passagierfilugzeugen zur Versorgung der Flugzeugpassagiere während eines Flugs vorgesehene Speisen und Getränke in Trolleys oder entsprechend eingerichteten Aufbewahrungsschränken im Bereich der Bordküchen gelagert, bis sie vom Kabinenpersonal an die Flugzeugpassagiere ausgegeben werden. Um die Speisen und Gertränke bis zu ihrem Verzehr kühl zu halten, ist es bekannt, die Trolleys oder die im Bereich der Bordküchen des Flugzeugs vorgesehenen Aufbewahrungsschränke mit Hilfe von Trockeneis zu kühlen. Dabei wird in Blockform gepresster Kohlendioxid-Schnee in ein oben liegendes Fach eines zu kühlenden Trolleys oder eines zu kühlenden Aufbewahrungsschranks eingebracht, so dass in dem Trolley oder dem Aufbewahrungsschrank gelagerte Güter mit Hilfe von durch Sublimation entstehendem, schwerkraftgetrieben nach unten sinkendem Kohlendioxidgas gekühlt werden. Die Kühlung mit Trockeneis ermöglicht eine autarke Kühlung der in dem Trolley oder dem Aufbewahrungsschrank aufgenommen Güter, für die keine zusätzlichen Einbauten Bereich der Bordküchen oder in anderen Flugzeugbereichen erforderlich sind. Die Kühlkapazität einer Trockeneiskühlung ist jedoch durch das zur Verfügung stehende Trockeneisvolumen begrenzt. Ein weiterer Nachteil einer Trockeneiskühlung ist die mangelnde Einflussmöglichkeit auf die sich einstellende Temperaturverteilung in dem kühlenden zu Trolley bzw. dem zu kühlenden Aufbewahrungsschrank. Schließlich ist die Herstellung von Trockeneis sehr energieaufwändig und folglich teuer.

Darüber hinaus ist es beispielsweise aus der DE 41 05 034 A1 bekannt, im Bereich der Bordküchen des Flugzeugs platzierte Trolleys zur Aufbewahrung von kühl zu lagernden Lebensmitteln mit Hilfe autarker, mit Kaltluft als Kühlmedium arbeitender und jeweils mit einer eigenen Kompressionskältemaschine (Air-Chiller) ausgestatteter Kühlvorrichtungen zu kühlen. Da die relativ voluminösen Kühlluftleitungen dieser Kühlvorrichtungen in dem begrenzten Einbauraum an Bord eines Flugzeugs nur schwer unterzubringen sind und überdies hohe Verluste verursachen, müssen die Air-Chiller jeweils im Bereich der Bordküchen eingebaut werden, wobei für jede Bordküche ein eigener Air-Chiller erforderlich ist. Im Bereich der Bordküchen ist der für zusätzliche Komponenten zur Verfügung stehende Einbauraum jedoch häufig besonders begrenzt. Darüber hinaus muss die warme Abluft der Air-Chiller, die durch den in diesen Geräten ablaufenden Kaltdampfprozess entsteht, separat aus der Flugzeugkabine abgeführt werden, was die Integration der Air-Chiller in unmittelbarer Nähe der Bordküchen zusätzlich erschwert.

Alternativ dazu beschreibt beispielsweise die DE 43 40 317 C2 eine zentrale Kompressionskältemaschine, deren Kälteleistung über einen Kälteträgertlüssigkeitskreislauf an im Bereich der Flugzeugboardküchen angeordnete Kühlstationen verteilt wird. Die von der zentralen Kältemaschine mit Kühlenergie versorgten Kühlstationen geben diese Kühlenergie über Kühlluftkreisläufe, die über entsprechende Wärmetauscher thermisch mit dem Flüssigkeitskälteträgerkreislauf der zentralen Kältemaschine gekoppelt sind, an im Bereich der Bordküchen des Flugzeugs platzierte Trolleys zur Aufbewahrung von kühl zu lagernden Lebensmitteln ab.

Ein weitere Beispiel is in DE102006013143 zu finden.

Die Lagerung von Lebensmitteln in gekühlten Trolleys oder in im Bereich der Flugzeugbordküchen angeordneten gekühlten Aufbewahrungseinrichtungen hat den Nachteil, dass die Lebensmittel vom Kabinenpersonal an die Passagiere verteilt werden müssen. Infolge dessen ist die Versorgung der Passagiere sehr zeitaufwändig und personalintensiv. Darüber hinaus kann auch bei hohem Personaleinsatz nicht gewährleistet werden, dass alle Passagiere gleichzeitig oder gar zu einem von den Passagieren gewünschten Zeitpunkt bedient werden. Ein weiterer Nachteil der derzeit in Flugzeugen eingesetzten Vorrichtungen zu Aufbewahrung von zur Versorgung von Flugzeugpassagieren vorgesehenen Lebensmitteln besteht darin, dass die Passagiere, beispielsweise bei der Essensbestellung, die zur Auswahl stehende Gerichte nicht sehen können. Dadurch kann es vorkommen, dass ein infolge einer verbalen Beschreibung ausgewähltes Gericht schließlich nicht den Erwartungen entspricht.

Der Erfindung liegt die Aufgabe zugrunde, eine Flugzeugpassagier-Serviceeinrichtung zur Aufnahme von zur Versorgung von Flugzeugpassagieren vorgesehenen kühl zu lagernden Gütern, wie z.B. Lebensmitteln und Getränken bereitzustellen, die es ermöglicht, ohne zusätzlichen Personalaufwand die Servicequalität für die Passagiere an Board des Flugzeugs zu verbessern.

Zur Lösung der oben genannten Aufgabe umfasst eine erfindungsgemäße Flugzeugpassagier-Serviceeinrichtung mit den Merkmale Anspruchs 1. Die kühl zu lagernden Güter können Lebensmittel oder Getränke, aber auch andere Güter sein, die an Bord eines Flugzeugs während des Flugs von den Passagieren benötigt oder gewünscht werden. Die Aufnahmeeinrichtung ist mit einer Sichtvorrichtung versehen, die dazu eingerichtet ist, es einem Nutzer zu ermöglichen, die in der Aufnahmeeinrichtung gelagerten Güter vor deren Entnahme aus der Aufnahmeeinrichtung in Augenschein zu nehmen. Mit anderen Worten, durch die Sichtvorrichtung kann sich ein Nutzer die in der Aufnahmeeinrichtung gelagerten Güter ansehen, ohne dass es erforderlich ist, die Aufnahmeeinrichtung zu öffnen. Die Sichtvorrichtung kann eine oder mehrere Öffnung(en) umfassen, die in einem vorderen, d.h. einem Nutzer zugänglichen Bereich der Aufnahmeeinrichtung angeordnet ist/sind. Die Öffnung(en) können durch eine durchsichtige Scheibe aus Glas oder einem durchsichtigen Kunststoffmaterial verschlossen sein. Vorzugsweise wird als Scheibenmaterial ein Material mit guten thermischen Isolationseigenschaften, wie z.B. Isolierglas eingesetzt.

Die Aufnahmeeinrichtung kann mehrere, vorzugsweise einzeln zu öffnende Fächer umfassen, wobei die Fächer sowohl vollständig umschlossen oder offen ausgeführt sein können. Die Fächer können als Schubfächer aber auch als Einlagefächer mit einer verschwenkbaren Klappe ausgestaltet sein. Durch eine derartige Ausgestaltung der Aufnahmeeinrichtung der erfindungsgemäßen Flugzeugpassagier-Serviceeinrichtung wird es ermöglicht, dass sich die Flugzeugpassagiere beispielsweise die zur Auswahl stehenden Gerichte ansehen können, bevor sie diese Gerichte beim Kabinenpersonal bestellen. Darüber hinaus ist es denkbar, die erfindungsgemäße Flugzeugpassagier-Serviceeinrichtung als Selbstbedienungseinrichtung zu nutzen, bei der die Flugzeugpassagiere selbst zu einem von ihnen gewünschten Zeitpunkt die in der Aufnahmeeinrichtung gelagerten Güter aus der Aufnahmeeinrichtung entnehmen können. Die erfindungsgemäße Flugzeug-Passagierserviceeinrichtung ermöglicht somit auf einfache Art und Weise und ohne zusätzlichen Personalaufwand die Erhöhung der Servicequalität an Bord eines Passagierflugzeugs.

Die Aufnahmeeinrichtung der erfindungsgemäßen Flugzeugpassagier-Serviceeinrichtung umfasst ferner einen Kühlmediumeinlass zur Zufuhr eines Kühlmediums in die Aufnahmeeinrichtung sowie einen Kühlmediumauslass zur Abfuhr des Kühlmediums aus der Aufnahmeeinrichtung. Der Kühlmediumeinlass und der Kühlmediumauslass der Aufnahmeeinrichtung sind mit einer Kühlmediumkreislaufleitung einer Kühlanordnung der erfindungsgemäßen Flugzeugpassagier-Serviceeinrichtung verbunden. Die Kühlanordnung umfasst ferner eine Einrichtung zur thermischen Kopplung eines die Kühlmediumkreislaufleitung durchströmenden Kühlmediums mit einer Käiteträgerfilüssigkeit, die eine Kälteträgerflüssigkeitsleitung eines zentralen Kühlsystems des Flugzeugs durchströmt. Mit anderen Worten, die Kopplungseinrichtung sorgt für die Übertragung von Kühlenergie, die durch die die Kälteträgerflüssigkeitskreislaufleitung des zentralen Flugzeugkühlsystems durchströmende Kälteträgerflüssigkeit bereitgestellt wird, auf das zur Kühlung der in der Aufnahmeeinrichtung der erfindungsgemäßen Flugzeugpassagier-Serviceeinrichtung gelagerten Güter genutzte Kühlmedium.

Durch den Anschluss an das zentrale Kühlsystem des Flugzeugs kann die erfindungsgemäße Flugzeugpassagier-Serviceeinrichtung unabhängig von der Flugzeugklimaanlage und der Umgebungstemperatur stets mit der zur Kühlung der in der Aufnahmeeinrichtung gelagerten Güter erforderlichen Kühlenergie versorgt werden. Dadurch können insbesondere dann, wenn es sich bei den kühl zu lagernden Gütern um Lebensmittel handelt, hohe Hygienestandards gewährleistet werden. Darüber hinaus kann auf die Bereitstellung separater Air-Chiller oder ähnlicher Kältemaschinen zur Versorgung der erfindungsgemäßen Flugzeugpassagier-Serviceeinrichtung mit Kühlenergie verzichtet werden, was zu einem leichteren und kompakteren Geräteaufbau und folglich einer größeren Flexibilität bei der Wahl des Einbauorts und somit der Gestaltung des Kabinendesigns führt. Die erfindungsgemäße Flugzeugpassagier-Serviceeinrichtung kann in allen Bereichen der Flugzeugkabine, d.h. innerhalb aber auch außerhalb der Bordküchen und in den Unterflurbereichen eingebaut werden. Bei der Gestaltung der Kühlanordnung erzielte Volumenersparnisse können dazu genutzt werden, die Aufnahmeeinrichtung größer zu gestalten und damit ein größeres Aufnahmevolumen für kühl zu lagernde Güter bereitzustellen. Darüber hinaus zeichnet sich die erfindungsgemäße Flugzeugpassagier-Serviceeinrichtung im Vergleich zu mit separaten Air-Chillern ausgestatteten Geräten im Betrieb durch eine deutlich geringere Geräuschentwicklung aus.

Das zum Zusammenwirken mit der erfindungsgemäßen Flugzeugpassagier-Serviceeinrichtung vorgesehene zentrale Kühlsystem des Flugzeugs ist als Flüssigkeitskühlsystem ausgebildet, das einen besonders effizienten Wärmeabtransport ermöglicht. Die Kälteträgerflüssigkeitskreislaufleitung kann daher einen vergleichsweise geringen Durchmesser aufweisen, so dass die Kälteträgerflüssigkeitskreislaufleitung ein geringes Einbauvolumen sowie ein geringes Gewicht aufweist und folglich gut in das Flugzeug integrierbar ist. Aufgrund seiner hohen Effizienz zeichnet sich das Kühlsystem durch einen geringen Energieverbrauch aus und trägt somit auf Flugzeugebene zu einer Reduktion des Kraftstoffverbrauchs bei. In dem zentralen Kühlsystem erfolgt die Kälteerzeugung durch eine oder mehrere zentrale Kältemaschine(n), die vorzugsweise außerhalb des bedruckten Bereichs des Flugzeugs angeordnet ist/sind. Dadurch ist es möglich, von der/den Kältemaschine(n) erzeugte Abwärme unmittelbar an die Außenluft abzugeben. Dies führt zu einer erheblichen Entlastung der Flugzeugklimaanlage.

In der erfindungsgemäßen Flugzeugpassagier-Serviceeinrichtung wird das zur Kühlung der in der Aufnahmeeinrichtung aufgenommenen Güter genutzte Kühlmedium im Wesentlichen in einem geschlossenen Kreislauf geführt. In der Praxis wird zumindest dann, wenn die Sichtvorrichtung nicht lediglich eine in der Aufnahmeeinrichtung ausgebildete Öffnung, sondern zusätzlich eine die Öffnung verschließende Scheibe aufweist, maximal während der Zeit Kühlmedium aus der Aufnahmeeinrichtung der erfindungsgemäßen Flugzeugpassagier-Serviceeinrichtung in die umgebende Flugzeugkabine austreten, während der die Aufnahmeeinrichtung zur Entnahme der darin gelagerten Güter geöffnet ist. Folglich wird durch die erfindungsgemäße Flugzeugpassagier-Serviceeinrichtung das Luftvolumen, die Lufttemperatur und die Luftverteilung in der Flugzeugkabine nicht beeinträchtigt. Darüber hinaus ermöglicht die Führung des Kühlmediums in einem quasi geschlossenen Kreislauf den Verzicht auf ein im Betrieb unter Umständen geräuschintensives und volumenintensives Abwärmesystem.

Vorzugsweise umfasst die Kühlanordnung der erfindungsgemäßen Flugzeugpassagier-Serviceeinrichtung eine Steuereinrichtung zur Steuerung der Temperatur und/oder der Temperaturverteilung in der Aufnahmeeinrichtung. Die Steuereinrichtung umfasst vorzugsweise einen Temperatursensor oder mehrere Temperatursensoren zur Erfassung der Temperatur und/oder der Temperaturverteilung in der Aufnahmeeinrichtung sowie zur Erfassung der Temperatur des die Kühlmediumkreislaufleitung durchströmenden Kühlmediums. Ferner kann die Steuereinrichtung einen Sensor zur Erfassung der Strömungsgeschwindigkeit und/oder des Strömungsvolumens des Kühlmediums durch die Kühlmediumkreislaufleitung umfassen. Schließlich umfasst die Steuereinrichtung vorzugsweise ferner eine elektronische Steuereinheit, die entweder in Abhängigkeit der von den Sensoren bereitgestellten Messwerte oder in Abhängigkeit von in der Steuereinheit gespeicherten Sollwerten die Strömungsgeschwindigkeit und/oder das Strömungsvolumen des Kühlmediums durch die Kühlmediumkreislaufleitung und/oder die Temperatur des die Kühlmediumkreislaufleitung durchströmenden Kühlmediums steuert. Mit Hilfe der Steuereinrichtung können in der Aufnahmeeinrichtung der erfindungsgemäßen Flugzeugpassagier-Serviceeinrichtung verschiedene Temperaturbereiche eingestellt werden. Je nach Anwendungsfall sind insbesondere drei Temperaturbereiche relevant, ein den sogenannten Galley Cooling Requirements entsprechender Temperaturbereich von ≤ 4°C, ein unterhalb des Gefrierpunkts von 0°C liegender Temperaturbereich sowie ein Temperaturbereich über 4°C.

Beispielsweise kann die Steuereinrichtung zur Steuerung der Temperatur und/oder der Temperaturverteilung in der Aufnahmeeinrichtung eine Bypassleitung umfassen, die dazu eingerichtet ist, über den Kühlmediumauslass der Aufnahmeeinrichtung aus der Aufnahmeeinrichtung abgeführtes erwärmtes Kühlmedium stromabwärts der Einrichtung zur thermischen Kopplung des die Kühlmediumkreislaufleitung durchströmenden Kühlmediums mit der die Kälteträgerflüssigkeitskreislaufleitung des zentralen Kühlsystems des Flugzeugs durchströmenden Kälteträgerflüssigkeit und stromaufwärts des Kühlmediumeinlasses der Aufnahmeeinrichtung in die Kühlmediumkreislaufleitung zuzuführen. Mit anderen Worten, die Bypassleitung ist so gestaltet, dass sie dem die Kühlmediumkreislaufleitung durchströmenden, infolge der Kühlenergieübertragung in der Kopplungseinrichtung abgekühlten Kühlmedium vor dessen Eintritt in den Kühlmediumeinlass der Aufnahmeeinrichtung durch Kühlenergietransfer auf die in der Aufnahmeeinrichtung gelagerten Güter erwärmtes Kühlmedium zudosieren kann. Eine derartige Ausgestaltung der Steuereinrichtung ermöglicht die Steuerung der Temperatur und/oder der Temperaturverteilung in der Aufnahmeeinrichtung ohne zusätzlichen Energieeintrag von außen und ist daher besonders energieeffizient. Alternativ dazu ist es jedoch auch denkbar, dem die Kühlmediumkreislaufleitung durchströmenden Kühlmedium, je nach Bedarf, von außen Kühlenergie oder Wärmeenergie zuzuführen. Zu diesem Zweck kann die Steuereinrichtung mit einer zusätzlichen Wärme- oder Kühlenergiequelle versehen sein.

Die Steuereinrichtung zur Steuerung der Temperatur und/oder der Temperaturverteilung in der Aufnahmeeinrichtung kann ferner ein Ventil umfassen. Das Ventil kann beispielsweise in der Kühlmediumkreislaufleitung angeordnet und dazu eingerichtet sein, die Zudosierung von Kühlmedium aus der Bypassleitung in die Kühlmediumkreislaufleitung zwischen der Kopplungseinrichtung und dem Kühlmediumeinlass der Aufnahmeeinrichtung zu steuern. Alternativ dazu kann das Ventil auch dazu eingerichtet sein, das die Kühlmediumkreislaufleitung durchströmende Kühlmedium vor dessen Eintritt in den Kühlmediumeinlass der Aufnahmeeinrichtung thermisch mit einer externen Wärmeenergie- oder Kühlenergiequelle zu koppeln. Vorzugsweise weist das Ventil einen variablen Strömungsquerschnitt auf. Das Ventil kann beispielsweise als Magnetventil ausgebildet sein und von der Steuereinheit der Steuereinrichtung gesteuert werden.

Das die Kühlmediumkreislaufleitung durchströmende Kühlmedium kann Luft oder eine Flüssigkeit sein. Wenn die Kühlmediumkreislaufleitung als Kühlflüssigkeitskreislaufleitung ausgebildet ist, ist die diese Leitung durchströmende Flüssigkeit vorzugsweise die gleiche Flüssigkeit, wie die die Kälteträgerflüssigkeitskreislaufleitung des zentralen Flugzeugkühlsystems durchströmende Kälteträgerfilüssigkeit. Beim Einsatz einer Flüssigkeitskühlung in der Kühlanordnung der erfindungsgemäßen Flugzeugpassagier-Serviceeinrichtung zeichnet sich die Kühlanordnung durch einen besonders geräuscharmen Betrieb aus und ist daher besonders gut geeignet, wenn die erfindungsgemäße Flugzeugpassagier-Serviceeinrichtung im First- oder Business-Class-Bereich des Flugzeugs eingesetzt werden soll.

Bei einer Ausführungsform der erfindungsgemäßen Flugzeugpassagier-Serviceeinrichtung sind der Kühlmediumeinlass und der Kühlmediumauslass der Aufnahmeeinrichtung unmittelbar mit einem Bereich der Aufnahmeeinrichtung verbunden, in dem die in der Aufnahmeeinrichtung gelagerten Güter aufgenommen sind. Eine derartige Anordnung bietet sich insbesondere dann an, wenn in der Kühlanordnung Luft als Kühlmedium verwendet wird. Die die Kühlmediumkreislaufleitung durchströmende Luft wird dann unmittelbar über die in der Aufnahmeeinrichtung gelagerten Güter geleitet (Air Through-Prinzip) und sorgt dabei für eine ausreichende Zufuhr von Kühlenergie zu den Gütern sowie eine ausreichende Wärmeabfuhr von den Gütern.

Alternativ dazu können der Kühlmediumeinlass und der Kühlmediumauslass der Aufnahmeeinrichtung jedoch auch mit einem geschlossenen Kühlmediumbereich der Aufnahmeeinrichtung verbunden sein. Mit anderen Worten, bei einer derartigen Ausgestaltung der erfindungsgemäßen Flugzeugpassagier-Serviceeinrichtung wird das Kühlmedium nicht unmittelbar über die in der Aufnahmeeinrichtung gelagerten Güter geleitet, sondern durchströmt ausschließlich den geschlossenen Kühlmediumbereich der Aufnahmeeinrichtung (Air Over-Prinzip). Der geschlossene Kühlmediumbereich der Aufnahmeeinrichtung ist vorzugsweise so gestaltet, dass er den Bereich der Aufnahmeeinrichtung, in dem die in der Aufnahmeeinrichtung aufgenommenen Güter gelagert sind, zumindest teilweise umgibt.

In der Kühlmediumkreislaufleitung kann eine Fördereinrichtung zur Förderung des Kühlmediums durch die Kühlmediumkreislaufleitung angeordnet sein. Wenn das die Kühlmediumkreislaufleitung durchströmende Kühlmedium Luft ist, ist die Fördereinrichtung vorzugsweise in Form eines Ventilators oder eines Gebläses ausgebildet. Wenn das die Kühlmediumkreislaufleitung durchströmende Kühlmedium eine Flüssigkeit ist, kann, falls erforderlich, als Fördereinrichtung beispielsweise eine Pumpe oder dergleichen eingesetzt werden.

Die Einrichtung zur thermischen Kopplung des die Kühlmediumkreislaufleitung durchströmenden Kühlmediums mit der die Kälteträgerflüssigkeitskreislaufleitung des zentralen Kühlsystems des Flugzeugs durchströmenden Kälteträgerflüssigkeit umfasst vorzugsweise einen Wärmetauscher. In Abhängigkeit der Art des Kühlmediums in der Kühlmediumkreislaufleitung kann der Wärmetauscher ein Flüssigkeits/Luftwärmetauscher oder ein Flüssigkeits/Flüssigkeitswärmetauscher sein. Der Wärmetauscher ermöglicht eine effiziente Kühlenergieübertragung von der die Kälteträgerflüssigkeitskreislaufleitung des zentralen Flugzeugkühlsystems durchströmenden Kälteträgerflüssigkeit auf das die Kühlmediumkreislaufleitung durchströmende Kühlmedium, ohne dass es zu einem direkten Kontakt zwischen der Kälteträgerflüssigkeit und dem Kühlmedium kommt. Wenn das die Kühlmediumkreislaufleitung durchströmende Kühlmedium eine Flüssigkeit ist, ist der Einsatz eines Wärmetauschers in der Kopplungseinrichtung insbesondere dann sinnvoll, wenn als Kühlmedium eine andere Flüssigkeit eingesetzt werden soll als als Kälteträgerflüssigkeit.

Alternativ oder zusätzlich dazu kann die Einrichtung zur thermischen Kopplung des die Kühlmediumkreislaufleitung durchströmenden Kühlmediums mit der die Kälteträgerflüssigkeitskreislaufleitung des zentralen Kühlsystems des Flugzeugs durchströmenden Kälteträgerflüssigkeit dazu eingerichtet sein, eine direkten Verbindung der Kühlmediumkreislaufleitung mit der Kälteträgerflüssigkeitskreislaufleitung des zentralen Kühlsystem des Flugzeugs herzustellen. Eine derartige Ausgestaltung der Kopplungseinrichtung ist insbesondere dann sinnvoll, wenn als Kühlmedium die gleiche Flüssigkeit eingesetzt wird wie als Kälteträgerflüssigkeit. Wenn die Kälteträgerflüssigkeitskreislaufleitung direkt mit der Kühlmediumkreislaufleitung verbindbar ist, kann eine gewünschte Menge Kälteträgerflüssigkeit aus der Kälteträgerflüssigkeitskreislaufleitung durch die Kühlmediumkreislaufleitung der Kühlanordnung der erfindungsgemäßen Flugzeugpassagier-Serviceeinrichtung geleitet werden. Auf eine zusätzliche Fördereinrichtung zur Förderung der Kühlflüssigkeit durch die Kühlmediumkreislaufleitung kann in Abhängigkeit der Druckverhältnisse in der Kälteträgerflüssigkeitskreislaufleitung unter Umständen verzichtet werden. Eine derartig ausgestaltete Flugzeugpassagier-Serviceeinrichtung zeichnet sich durch einen besonders einfachen, leichtgewichtigen und kompakten Aufbau sowie durch einen besonders geräuscharmen Betrieb aus.

Die Einrichtung zur thermischen Kopplung des die Kühlmediumkreislaufleitung durchströmenden Kühlmediums mit der die Kälteträgerflüssigkeitskreislaufleitung des zentralen Kühlsystems des Flugzeugs durchströmenden Kälteträgerflüssigkeit kann ein steuerbares Ventil umfassen. Das Ventil ist vorzugsweise dazu eingerichtet, in einer ersten Stellung eine Verbindung zwischen der Kühlmediumkreislaufleitung und der Kälteträgerflüssigkeitskreislaufleitung des zentralen Flugzeugkühlsystems herzustellen und in einer zweiten Stellung die Verbindung zwischen der Kühlmediumkreislaufleitung und der Kälteträgerflüssigkeitskreislaufleitung des zentralen Flugzeugkühlsystems zu unterbrechen. Das Ventil, das vorzugsweise einen variablen Strömungsquerschnitt aufweist, kann beispielsweise als Magnetventil ausgestaltet sein. Das Ventil kann ferner dazu eingerichtet sein, von einer elektronischen Steuereinheit einer Steuereinrichtung zur Steuerung der Temperatur und/oder der Temperaturverteilung in der Aufnahmeeinrichtung gesteuert zu werden. Alternativ dazu kann jedoch auch eine separate, vorzugsweise elektronische Steuereinheit zur Steuerung des Ventils vorgesehen sein.

Bevorzugte Ausführungsbeispiele einer erfindungsgemäßen Flugzeugpassagier-Serviceeinrichtung werden im Folgenden mit Bezugnahme auf die beigefügten schematischen Zeichnungen näher erläutert, von denen
- Figur 1: eine Übersichtsdarstellung einer Flugzeugpassagier-Serviceeinrichtung mit einer Kühlanordnung zeigt, in der Luft als Kühlmedium verwendet und unmittelbar durch einen zur Güteraufnahme vorgesehenen Bereich einer Aufnahmeeinrichtung geleitet wird,
- Figur 2: eine Querschnittsansicht einer Aufnahmeeinrichtung einer in Figur 1 dargestellten Flugzeugpassagier-Serviceeinrichtung zeigt,
- Figur 3: eine Übersichtsdarstellung einer Flugzeugpassagier-Serviceeinrichtung mit einer Kühlanordnung zeigt, in der Luft als Kühlmedium verwendet und durch einen geschlossenen Kühlmediumbereich einer Aufnahmeeinrichtung geleitet wird,
- Figur 4: eine Übersichtsdarstellung einer Flugzeugpassagier-Serviceeinrichtung mit einer Kühlanordnung zeigt, die eine direkt mit einer Kälteträgerflüssigkeitskreislaufleitung eines zentralen Flugzeugkühlsystems verbindbare Kühlmediumkreislaufleitung umfasst, und
- Figur 5: eine Querschnittsansicht einer Aufnahmeeinrichtung der in Figur 4 dargestellten Flugzeugpassagier-Serviceeinrichtung zeigt.

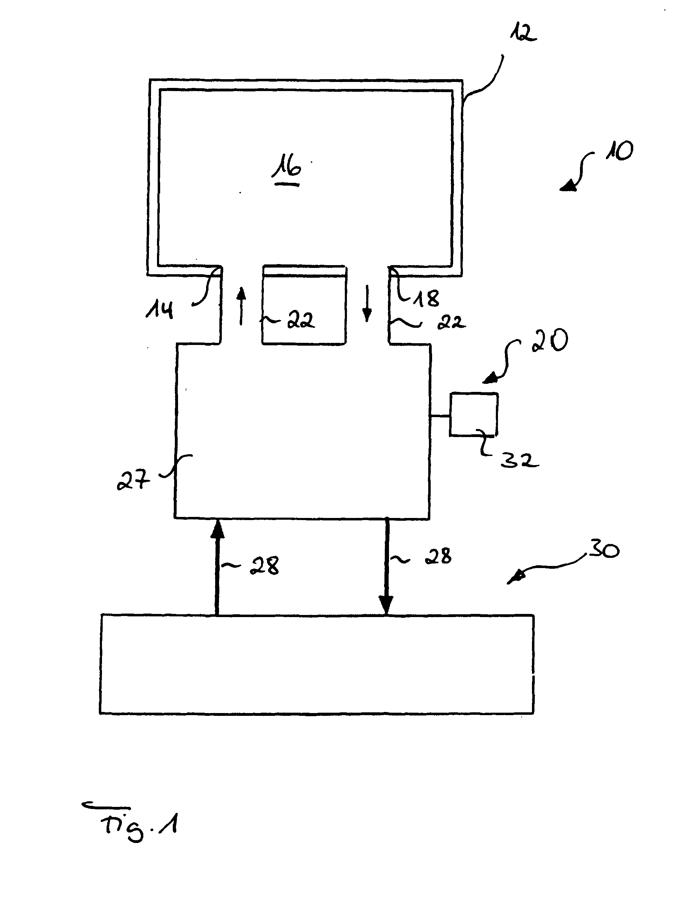

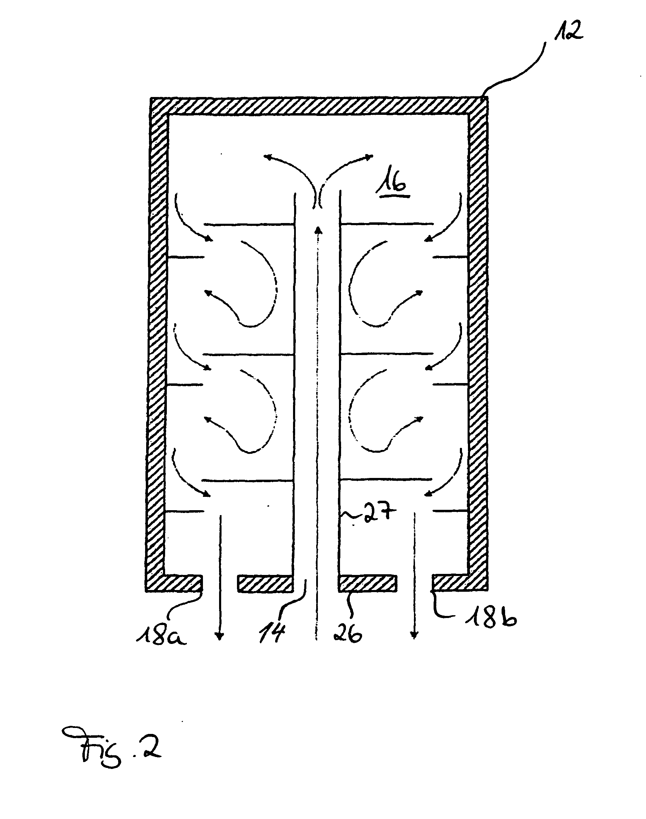

Eine in den Figuren 1 und 2 gezeigte Flugzeugpassagier-Serviceeinrichtung 10 umfasst eine schrankförmig ausgebildete Aufnahmeeinrichtung 12 zur Aufnahme von kühl zu lagernden Gütern. Die Güter können beispielsweise Lebensmittel oder Getränke sein und dienen der Versorgung von Flugzeugpassagieren während eines Flugs. Wie der Figur 2 zu entnehmen ist, weist die Aufnahmeeinrichtung 12 mehrere Fächer auf, in denen die kühl zu lagernden Güter platziert werden können. Auf einer vorderen, d.h. einem Nutzer der Flugzeugpassagier-Serviceeinrichtung 10 zugänglichen Seite ist die Aufnahmeeinrichtung 12 mit einer Sichtvorrichtung versehen, die dazu eingerichtet ist, es dem Nutzer zu ermöglichen, die in der Aufnahmeeinrichtung 12 gelagerten Güter vor deren Entnahme aus der Aufnahmeeinrichtung 12 in Augenschein zu nehmen. Beispielsweise kann die Sichtvorrichtung eine aus Isolierglas bestehende Scheibe umfassen. Die Fächer der Aufnahmeeinrichtung 12 können einzeln zugänglich sein. Alternativ dazu ist es jedoch auch möglich, die Aufnahmeeinrichtung 12 mit lediglich einer einzigen Tür zu versehen. Die Aufnahmeeinrichtung 12 kann ausschließlich zur Bedienung durch das Kabinenpersonal des Flugzeugs vorgesehen sein. Alternativ dazu kann die Aufnahmeeinrichtung 12 jedoch auch als Selbstbedienungseinrichtung für die Flugzeugpassagiere genutzt werden.

Die Aufnahmeeinrichtung 12 ist mit einem Kühlmediumeinlass 14 versehen, durch den ein Kühlmedium unmittelbar in einen inneren Bereich 16 der Aufnahmeeinrichtung 12 geleitet werden kann, der zur Aufnahme der in der Aufnahmeeinrichtung 12 zu lagernden Güter vorgesehen ist. Zur Abfuhr des Kühlmediums aus dem inneren Bereich 16 der Aufnahmeeinrichtung 12 ist ein Kühlmediumauslass 18 vorgesehen. Bei der in den Figuren 1 und 2 gezeigten, nach dem sogenannten Air Through-Prinzip arbeitenden Anordnung wird als der Aufnahmeeinrichtung 12 zuzuführendes Kühlmedium Luft verwendet.

Die Flugzeugpassagier-Serviceeinrichtung 10 umfasst ferner eine Kühlanordnung 20 mit einer den Kühlmediumeinlass 14 und den Kühlmediumauslass 18 der Aufnahmeeinrichtung 12 verbindenden Kühlmediumkreislaufleitung 22. In der Kühlmediumkreislaufleitung 22 wird das Kühlmedium Luft mit Hilfe einer geeigneten Fördereinrichtung, beispielsweise eines Ventilators oder Gebläses (nicht gezeigt) in einem quasi geschlossenen Kreislauf geführt. Unter einem quasi geschlossenen Kreislauf wird hier ein Kreislauf verstanden, der nur dann den Austritt von Kühlmedium in die umgebende Flugzeugkabine ermöglicht, wenn die Aufnahmeeinrichtung 12 bzw. ein Fach der Aufnahmeeinrichtung 12 beispielsweise zur Entnahme der darin gelagerten Güter geöffnet wird.

Wie in Figur 2 gezeigt ist, ist der Kühlmediumeinlass 14 der Aufnahmeeinrichtung 12 mit einer sich durch den Innenraum 16 der Aufnahmeeinrichtung 12 erstreckenden Verteilungsleitung 24 verbunden. Mit Hilfe der Verteilungsleitung 24 wird die kalte Luft aus der Kühlmediumkreislaufleitung 22 in einen oberen Bereich des Innenraum 16 der Aufnahmeeinrichtung 12 geleitet. Aus diesem oberen Bereich des Aufnahmeeinrichtungsinnenraums 16 sinkt die kalte Luft nach unten ab und verteilt sich dabei gleichmäßig in den im Innenraum 16 der Aufnahmeeinrichtung 12 vorgesehenen Fächern. Dabei wird den in den Fächern gelagerten Gütern Kühlenergie zugeführt bzw. Wärmeenergie von diesen Gütern abgeführt. Die Kühlmediumabfuhr aus dem Innenraum 16 der Aufnahmeeinrichtung 12 erfolgt durch den in einem Boden 26 der Aufnahmeeinrichtung 12 ausgebildeten Kühlmediumauslass 18, der in der in Figur 2 gezeigten Ausführungsform einer Aufnahmeeinrichtung 12 zwei voneinander unabhängige Auslassöffnungen 18a, 18b umfasst.

Die Kühlanordnung 20 der Flugzeugpassagier-Serviceeinrichtung 10 umfasst ferner eine Einrichtung 27 zur thermischen Kopplung des die Kühlmediumkreislaufleitung 22 durchströmenden Kühlmediums mit einer eine Kälteträgerfilüssigkeitskreislaufleitung 28 eines zentralen Kühlsystems 30 des Flugzeugs durchströmenden Kälteträgerflüssigkeit. Um für einen ordnungsgemäßen Kühlenergietransfer von der die Kälteträgerflüssigkeitskreislaufleitung 28 des zentralen Flugzeugkühlsystems 30 durchströmenden Kälteträgerflüssigkeit auf das die Kühlmediumkreislaufleitung 22 durchströmende Kühlmedium Luft zu sorgen, umfasst die Kopplungseinrichtung 27 einen in Figur 1 nicht näher veranschaulichten Flüssigkeits/Luftwärmetauscher.

Darüber hinaus umfasst die Kühlanordnung 20 der Flugzeugpassagier-Serviceeinrichtung 10 eine Steueranordnung 32 zur Steuerung der Temperatur und/oder der Temperaturverteilung in dem mit Kühlenergie zu versorgenden Innenraum 16 der Aufnahmeeinrichtung 12. Die Steueranordnung 32 umfasst in Figur 1 nicht gezeigte Sensoren zur Erfassung der temperatur im Innenraum 16 der Aufnahmeeinrichtung 12 sowie zur Erfassung der Temperatur der die Kühlmediumkreislaufleitung 22 durchströmenden Luft. Die von den Sensoren erzeugten Signale werden von einer elektronischen Steuereinheit verarbeitet. In Reaktion auf die Sensorsignale steuert die elektronische Steuereinheit die Temperatur und/oder den Volumenstrom und/oder die Strömungsgeschwindigkeit des Kühlmediums in der Kühlmediumkreislaufleitung 22. Mit Hilfe der Steueranordnung 32 kann somit in dem Innenraum 16 der Aufnahmeeinrichtung 12 stets eine gewünschte Temperatur und Temperaturverteilung eingestellt werden.

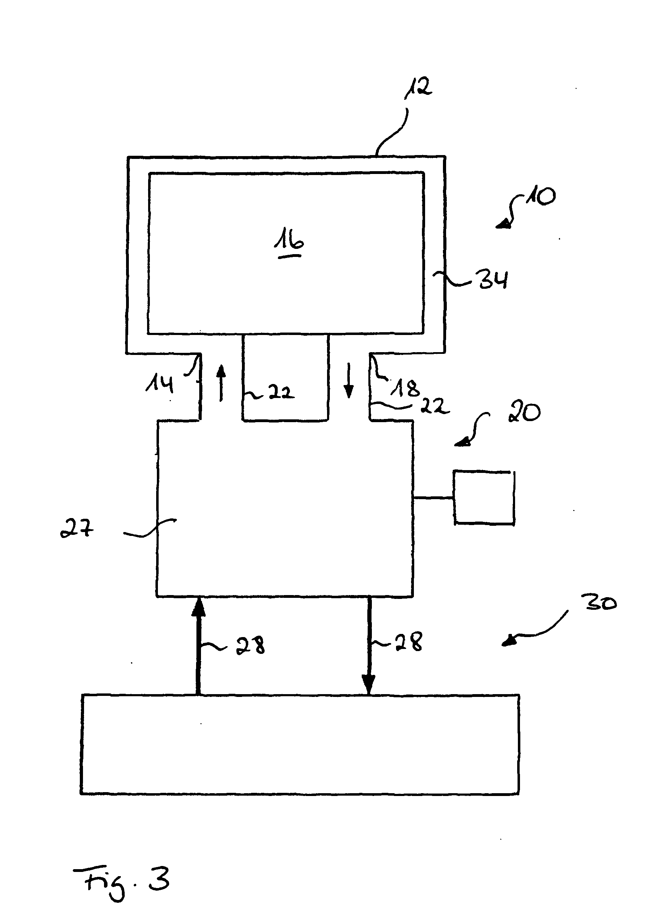

Die in Figur 3 gezeigte Flugzeugpassagier-Serviceeinrichtung 10 unterscheidet sich von der Anordnung gemäß den Figuren 1 und 2 dadurch, dass das die Kühlmediumkreislaufleitung 22 durchströmende Kühlmedium nicht unmittelbar in den Innenraum 16 der Aufnahmeeinrichtung 12 und über die dort gelagerten Güter geleitet wird. Stattdessen sind der Kühlmediumeinlass 14 und der Kühlmediumauslass 18 der Aufnahmeeinrichtung 12 mit einem abgeschlossenen Kühlmediumbereich 34 der Aufnahmeeinrichtung 12 verbunden (Air Over-Prinzip). Der geschlossene Kühlmediumbereich 34 ist beispielsweise so gestaltet, dass er den zur Aufnahme der kühl zu lagernden Güter vorgesehenen Innenraum 16 der Aufnahmeeinrichtung 12 zumindest teilweise umgibt. Durch die in Figur 3 gezeigte Ausgestaltung der Flugzeugpassagier-Serviceeinrichtung 10 wird ein vollständig geschlossener Kühlmediumkreislauf, d.h. ein Kühlmediumkreislauf realisiert, aus dem im Normalbetrieb kein Kühlmedium in die umgebende Flugzeugkabine austreten kann. Im Übrigen entsprechen der Aufbau und die Funktionsweise der in Figur 3 gezeigten Flugzeugpassagier-Serviceeinrichtung 10 dem Aufbau und der Funktionsweise der Anordnung gemäß den Figuren 1 und 2.

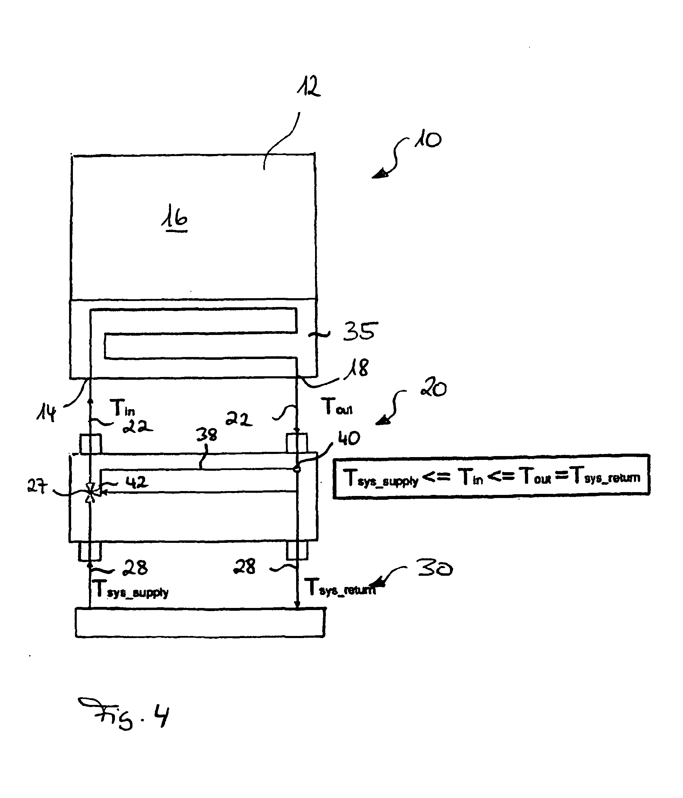

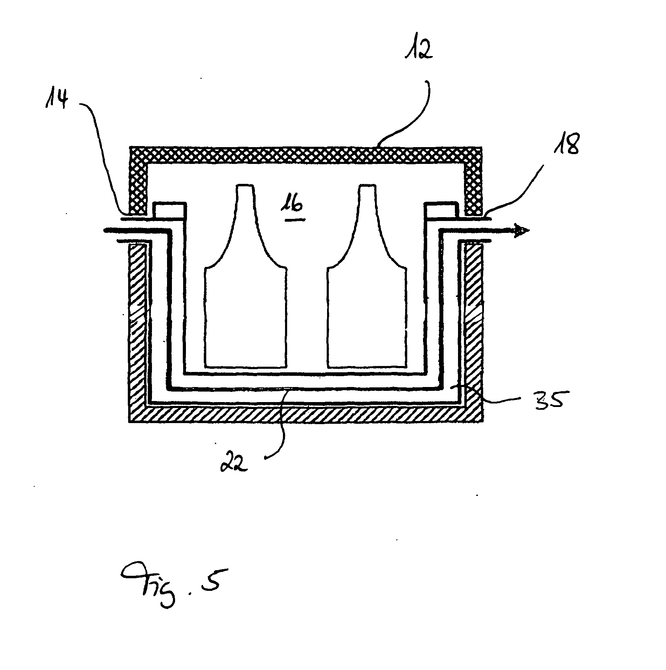

In den Figuren 4 und 5 ist schließlich eine Flugzeugpassagier-Serviceeinrichtung 10 gezeigt, bei der in der Kühlmediumkreislaufleitung 22 der Kühlanordnung 20 eine Flüssigkeit als Kühlmedium im Kreislauf geführt wird. Die Kühlmediumkreislaufleitung 22 erstreckt sich durch einen den Innenraum 16 der Aufnahmeeinrichtung 12 zumindest teilweise umgebenden geschlossenen Kühlmediumbereich 35 (Cold Plate-Prinzip, siehe Figur 5).

Grundsätzlich kann eine Flugzeugpassagier-Serviceeinrichtung 10 mit einer Kühlanordnung 20, in deren Kühlmediumkreislaufleitung 22 ein flüssiges Kühlmedium zum Einsatz kommt, einen ähnlichen Aufbau aufweisen wie die in den Figuren 1 bis 3 gezeigten, mit einer Luftkühlanordnung 20 ausgestatteten Flugzeugpassagier-Serviceeinrichtungen 10. Das heißt, auch eine Flüssigkeitskühlanordnung 20 kann eine einen Wärmetauscher umfassende Kopplungseinrichtung 27 sowie eine, wie oben beschrieben, ausgebildete Temperatursteuereinrichtung 32 umfassen.

Alternativ dazu kann eine Flüssigkeitskühlanordnung 20 jedoch auch eine Kopplungseinrichtung 27 umfassen, die eine direkte Verbindung der Kühlmediumkreislaufleitung 22 der Kühlanordnung 20 mit der Kälteträgerflüssigkeitskreislaufleitung 28 des zentralen Flugzeugkühlsystems 30 ermöglicht. Wie in Figur 4 gezeigt ist, kann die Kopplungseinrichtung 27 ein Ventil umfassen, das in einer ersten Stellung eine Verbindung zwischen der Kühlmediumkreislaufleitung 22 und der Kälteträgerflüssigkeitskreislaufleitung 28 des zentralen Flugzeugkühlsystems 30 herstellt und in einer zweiten Stellung die Verbindung zwischen der Kühlmediumkreislaufleitung 22 und der Kälteträgerflüssigkeitskreislaufleitung 28 des zentralen Flugzeugkühlsystems 30 unterbricht. Das Ventil kann als steuerbares Magnetventil ausgebildet sein.

Bei einer Flüssigkeitskühlanordnung 20, die eine direkte Verbindung zwischen der Kühlmediumkreislaufleitung 22 und der Kälteträgerflüssigkeitskreislaufleitung 28 des zentralen Flugzeugkühlsystems 30 vorsieht, entspricht die in der Kühlmediumkreislaufleitung 22 zirkulierende Flüssigkeit der die Kälteträgerflüssigkeitskreislaufleitung 28 des zentralen Flugzeugkühlsystems 30 durchströmenden Kälteträgerflüssigkeit. Eine Flüssigkeitskühlanordnung 20, die eine direkte Verbindung der Kühlmediumkreislaufleitung 22 mit der Kälteträgerflüssigkeitskreislaufleitung 28 des zentralen Flugzeugkühlsystems 30 vorsieht, zeichnet sich durch einen besonders kompakten und leichtgewichtigen Aufbau sowie durch den Verzicht auf eine zusätzliche Fördereinrichtung zur Förderung des Kühlmediums durch die Kühlmediumkreislaufleitung 22 einen besonders geräuscharmen Betrieb aus.

Darüber hinaus ist in Figur 4 eine bevorzugte Ausführungsform einer Steuereinrichtung 32 zur Steuerung der Temperatur und/oder der Temperaturverteilung im Innenraum 16 der Aufnahmeeinrichtung 12 gezeigt. Die Steuereinrichtung 32 umfasst eine Bypassleitung 38. Ein erstes Ende 40 der Bypassleitung 38 ist stromabwärts des Kühlmediumauslasses 18 der Aufnahmeeinrichtung 12, aber stromaufwärts der Kopplungseinrichtung 27 mit der Kühlmediumkreislaufleitung 22 verbunden. Die Bypassleitung 38 wird folglich von Kühlmedium durchströmt, das durch Abgabe seiner Kühlenergie an die zu kühlenden Güter in der Aufnahmeeinrichtung 12 erwärmt wurde. Ein zweites Ende 42 der Bypassleitung 38 mündet stromaufwärts des Kühlmediumeinlasses 14 der Aufnahmeeinrichtung 12 und stromabwärts der Kopplungseinrichtung 27 in die Kühlmediumkreislaufleitung 22. In diesem Zusammenhang soll der Ausdruck "stromabwärts der Kopplungseinrichtung 27" auch den in Figur 4 gezeigten Fall umfassen, in dem das zweite Ende 42 der Bypassleitung 38 unmittelbar im Bereich der Kopplungseinrichtung 27 in die Kühlmediumkreislaufleitung 22 mündet. Wesentlich ist bei der Anordnung des zweiten Endes 42 der Bypassleitung 38 lediglich, dass die Bypassleitung 38 durchströmendes erwärmtes Kühlmedium dem die Kühlmediumkreislaufleitung 22 durchströmenden und durch Kühlenergietransfer in der Kopplungseinrichtung 27 abgekühlten Kühlmedium vor dessen Eintritt in den Kühlmediumeinlass 14 der Aufnahmeeinrichtung 12 zudosiert werden kann.

In der in Figur 4 dargestellten besonders einfach aufgebauten Ausgestaltung umfasst die Kopplungseinrichtung 27 ein steuerbares Dreiwegeventil, das in Abhängigkeit seiner Stellung eine Verbindung zwischen der Kühlmediumkreislaufleitung 22 und der Kälteträgerflüssigkeitskreislaufleitung 28 des zentralen Flugzeugkühlsystems 30 herstellen oder unterbrechen und zusätzlich eine Verbindung zwischen der Bypassleitung 38 und der Kühlmediumkreislaufleitung 22 herstellen oder unterbrechen kann.

## Patentansprüche

1. Flugzeugpassagier-Serviceeinrichtung (10) zur Aufnahme von zur Versorgung von Flugzeugpassagieren vorgesehenen kühl zu lagernden Gütern mit:
- einer Aufnahmeeinrichtung (12), die eine Sichtvorrichtung, einen Kühlmediumeinlass (14) zur Zufuhr eines Kühlmediums in die Aufnahmeeinrichtung (12) sowie einen Kühlmediumauslass (18) zur Abfuhr des Kühlmediums aus der Aufnahmeeinrichtung (12) umfasst, wobei die Sichtvorrichtung dazu eingerichtet ist, es einem Nutzer zu ermöglichen, in der Aufnahmeeinrichtung (12) gelagerte Güter vor deren Entnahme aus der Aufnahmeeinrichtung (12) in Augenschein zu nehmen, und
- einer Kühlanordnung (20), die eine mit dem Kühlmediumeinlass (14) und dem Kühlmediumauslass (18) der Aufnahmeeinrichtung (12) verbundene Kühlmediumkreislaufleitung (22), eine Einrichtung (27) zur thermischen Kopplung eines die Kühlmediumkreislaufleitung (22) durchströmenden Kühlmediums mit einer eine Kälteträgerflüssigkeitskreislaufleitung (28) eines zentralen Kühlsystems (30) des Flugzeugs durchströmenden Kälteträgerflüssigkeit sowie eine Steuereinrichtung (32) zur Steuerung der Temperatur und/oder der Temperaturverteilung in der Aufnahmeeinrichtung (12) umfasst, wobei die Steuereinrichtung (32) zur Steuerung der Temperatur und/oder der Temperaturverteilung in der Aufnahmeeinrichtung (12) eine Bypassleitung (38) umfasst, die dazu eingerichtet ist, über den Kühlmediumauslass (18) der Aufnahmeeinrichtung (12) aus der Aufnahmeeinrichtung (12) abgeführtes erwärmtes Kühlmedium stromabwärts der Einrichtung (27) zur thermischen Kopplung des die Kühlmediumkreislaufleitung (22) durchströmenden Kühlmediums mit der die Kälteträgerflüssigkeitskreislaufleitung (28) des zentralen Kühlsystems (30) des Flugszeugs durchströmenden Kälteträgerflüssigkeit und stromaufwärts des Kühlmediumeinlasses (14) der Aufnahmeeinrichtung (12) in die Kühlmediumkreislaufleitung (22) zuzuführen.

2. Flugzeugpassagier-Serviceeinrichtung nach Anspruch 1,
**dadurch gekennzeichnet, dass** die Steuereinrichtung (32) zur Steuerung der Temperatur und/oder der Temperaturverteilung in der Aufnahmeeinrichtung (12) ein Ventil umfasst.

3. Flugzeugpassagier-Serviceeinrichtung nach Anspruch 1 oder 2,
**dadurch gekennzeichnet, dass** das die Kühlmediumkreislaufleitung (22) durchströmende Kühlmedium Luft ist.

4. Flugzeugpassagier-Serviceeinrichtung nach einem der Ansprüche 1 bis 3,
**dadurch gekennzeichnet, dass** das die Kühlmediumkreislaufleitung (22) durchströmende Kühlmedium eine Flüssigkeit ist.

5. Flugzeugpassagier-Serviceeinrichtung nach Anspruch 3,
**dadurch gekennzeichnet, dass** der Kühlmediumeinlass (14) und der Kühlmediumauslass (18) der Aufnahmeeinrichtung (12) unmittelbar mit einem Bereich (16) der Aufnahmeeinrichtung (12) verbunden sind, in dem die in der Aufnahmeeinrichtung (12) gelagerten Güter aufgenommen sind.

6. Flugzeugpassagier-Serviceeinrichtung nach Anspruch 3 oder 4,
**dadurch gekennzeichnet, dass** der Kühlmediumeinlass (14) und der Kühlmediumauslass (18) der Aufnahmeeinrichtung (12) mit einem geschlossenen Kühlmediumbereich (34) der Aufnahmeeinrichtung (12) verbunden sind.

7. Flugzeugpassagier-Serviceeinrichtung nach einem der Ansprüche 1 bis 6,
**dadurch gekennzeichnet, dass** in der Kühlmediumkreislaufleitung (22) eine Fördereinrichtung zur Förderung des Kühlmediums durch die Kühlmediumkreislaufleitung (22) angeordnet ist.

8. Flugzeugpassagier-Serviceeinrichtung nach einem der Ansprüche 1 bis 7,
**dadurch gekennzeichnet, dass** die Einrichtung (27) zur thermischen Kopplung des die Kühlmediumkreislaufleitung (22) durchströmenden Kühlmediums mit der die Kälteträgertlüssigkeitskreislaufleitung (28) des zentralen Kühlsystems (30) des Flugszeugs durchströmenden Kälteträgerflüssigkeit einen Wärmetauscher umfasst.

9. Flugzeugpassagier-Serviceeinrichtung nach einem der Ansprüche 1 bis 8,
**dadurch gekennzeichnet, dass** die Einrichtung (27) zur thermischen Kopplung des die Kühlmediumkreislaufleitung (22) durchströmenden Kühlmediums mit der die Kälteträgerflüssigkeitskreislaufleitung (28) des zentralen Kühlsystems (30) des Flugszeugs durchströmenden Kälteträgerflüssigkeit dazu eingerichtet ist, eine direkte Verbindung der Kühlmediumkreislaufleitung (22) mit der Kälteträgerflüssigkeitskreislaufleitung (28) des zentralen Kühlsystems (30) des Flugszeugs herzustellen.

10. Flugzeugpassagier-Serviceeinrichtung nach Anspruch 9,
**dadurch gekennzeichnet, dass** die Einrichtung (27) zur thermischen Kopplung des die Kühlmediumkreislaufleitung (22) durchströmenden Kühlmediums mit der die Kälteträgerflüssigkeitskreislaufleitung (28) des zentralen Kühlsystems (30) des Flugszeugs durchströmenden Kälteträgerflüssigkeit ein steuerbares Ventil umfasst, das in einer ersten Stellung eine Verbindung zwischen der Kühlmediumkreislaufleitung (22) und der Kälteträgerflüssigkeitskreislaufleitung (28) des zentralen Kühlsystems (30) des Flugszeugs herstellt und in einer zweiten Stellung die Verbindung zwischen der Kühlmediumkreislaufleitung (22) und der Kälteträgerflüssigkeitskreislaufleitung (28) des zentralen Kühlsystems (30) des Flugszeugs unterbricht.

## Claims

1. Aircraft passenger service device (10) for receiving goods for cold storage to be supplied to aircraft passengers, having:
- a receiving device (12) which comprises a viewing apparatus, a coolant inlet (14) for feeding a coolant into the receiving device (12) and a coolant outlet (18) for discharging the coolant from said receiving device (12), wherein the viewing apparatus is designed to enable a user to inspect goods stored in the receiving device (12) before they are removed from the receiving device (12), and
- a cooling arrangement (20) which comprises a coolant circuit line (22) connected to the coolant inlet (14) and the coolant outlet (18) of the receiving device (12), a device (27) for thermally coupling a coolant flowing through the coolant circuit line (22) to a refrigerant fluid flowing through a refrigerant fluid circuit line (28) of a central cooling system (30) of the aircraft, and a control device (32) for controlling the temperature and/or the temperature distribution within the receiving device (12), wherein the control device (32) for controlling the temperature and/or the temperature distribution within the receiving device (12) comprises a bypass line (38) which is designed to feed heated-up coolant discharged from the receiving device (12) via the coolant outlet (18) of the receiving device (12), into the coolant circuit line (22) downstream of the device (27) for thermally coupling the coolant flowing through the coolant circuit line (22) to the refrigerant fluid flowing through the refrigerant fluid circuit line (28) of the central cooling system (30) of the aircraft, and upstream of the coolant inlet (14) of said receiving device (12).

2. Aircraft passenger service device according to claim 1,
**characterised in that** the control device (32) for controlling the temperature and/or the temperature distribution within the receiving device (12) comprises a valve.

3. Aircraft passenger service device according to claim 1 or 2,
**characterised in that** the coolant flowing through the coolant circuit line (22) is air.

4. Aircraft passenger service device according to one of claims 1 to 3,
**characterised in that** the coolant flowing through the coolant circuit line (22) is a fluid.

5. Aircraft passenger service device according to claim 3,
**characterised in that** the coolant inlet (14) and the coolant outlet (18) of the receiving device (12) are directly connected to an area (16) of said receiving device (12) in which the goods stored in said receiving device (12) are received.

6. Aircraft passenger service device according to claim 3 or 4,
**characterised in that** the coolant inlet (14) and the coolant outlet (18) of the receiving device (12) are connected to a closed coolant area (34) of said receiving device (12).

7. Aircraft passenger service device according to one of claims 1 to 6,
**characterised in that** a conveying device for conveying the coolant through the coolant circuit line (22) is arranged in said coolant circuit line (22).

8. Aircraft passenger service device according to one of claims 1 to 7,
**characterised in that** the device (27) for thermally coupling the coolant flowing through the coolant circuit line (22) to the refrigerant fluid flowing through the refrigerant fluid circuit line (28) of the central cooling system (30) of the aircraft comprises a heat exchanger.

9. Aircraft passenger service device according to one of claims 1 to 8,
**characterised in that** the device (27) for thermally coupling the coolant flowing through the coolant circuit line (22) to the refrigerant fluid flowing through the refrigerant fluid circuit line (28) of the central cooling system (30) of the aircraft is designed to bring about a direct connection of the coolant circuit line (22) to the refrigerant fluid circuit line (28) of the central cooling system (30) of the aircraft.

10. Aircraft passenger service device according to claim 9,
**characterised in that** the device (27) for thermally coupling the coolant flowing through the coolant circuit line (22) to the refrigerant fluid flowing through the refrigerant fluid circuit line (28) of the central cooling system (30) of the aircraft comprises a controllable valve which, in a first position, brings about a connection between the coolant circuit line (22) and the refrigerant fluid circuit line (28) of the central cooling system (30) of the aircraft and, in a second position, interrupts the connection between the coolant circuit line (22) and the refrigerant fluid circuit line (28) of the central cooling system (30) of the aircraft.

## Revendications

1. Dispositif (10) pour le service de passagers d'un avion, destiné à recevoir des produits à conserver au frais et destinés à la consommation des passagers d'un avion, comportant :
- un dispositif récepteur (12) qui comprend un dispositif de visualisation, une entrée d'agent réfrigérant (14) pour amener un agent réfrigérant dans ledit dispositif récepteur (12) ainsi qu'une sortie d'agent réfrigérant (18) pour évacuer l'agent réfrigérant du dispositif récepteur (12), le dispositif de visualisation étant conçu pour permettre à un utilisateur de voir les produits stockés à l'intérieur du dispositif récepteur (12) avant de les sortir de celui-ci, et
- un dispositif réfrigérant (20) qui comporte une conduite de circuit d'agent réfrigérant (22) relié à l'entrée d'agent réfrigérant (14) et à la sortie d'agent réfrigérant (18), un dispositif (27) pour le couplage thermique d'un agent réfrigérant traversant ledit conduit de circuit d'agent réfrigérant (22) avec un liquide frigoporteur traversant un conduit de circuit de liquide frigoporteur (28) d'un système de réfrigération central (30) de l'avion, ainsi qu'un dispositif (32) pour la commande de la température et/ou de la répartition de la température dans le dispositif récepteur (12), ledit dispositif de commande (32) comportant une conduite de dérivation (38) conçu pour amener dans la conduite de circuit d'agent réfrigérant (22), en aval du dispositif (27) pour le couplage thermique de l'agent réfrigérant traversant la conduite de circuit d'agent réfrigérant (22) avec le liquide frigoporteur traversant la conduite de circuit de liquide frigoporteur (28) du système de réfrigération central (30) de l'avion et en amont de l'entrée d'agent réfrigérant (14) du dispositif récepteur (12), l'agent réfrigérant chargé en calories et évacué du dispositif récepteur (12) par la sortie d'agent réfrigérant (18) de celui-ci.

2. Dispositif (10) pour le service de passagers d'un avion selon la revendication 1, **caractérisé en ce que** le dispositif (32) pour la commande de la température et/ou de la répartition de la température dans le dispositif récepteur (12) comporte une valve.

3. Dispositif (10) pour le service de passagers d'un avion selon la revendication 1 ou 2,
**caractérisé en ce que** l'agent réfrigérant traversant la conduite de circuit de l'agent réfrigérant (22) est de l'air.

4. Dispositif (10) pour le service de passagers d'un avion selon l'une des revendications 1 à 3,
**caractérisé en ce que** l'agent réfrigérant traversant la conduite de circuit de l'agent réfrigérant (22) est un liquide.

5. Dispositif (10) pour le service de passagers d'un avion selon la revendication 3, **caractérisé en ce que** l'entrée d'agent réfrigérant (14) et la sortie d'agent réfrigérant (18) du dispositif récepteur (12) sont directement reliées à une zone (16) du dispositif récepteur (12), dans laquelle sont logés les produits stockés à l'intérieur du dispositif récepteur (12).

6. Dispositif (10) pour le service de passagers d'un avion selon la revendication 3 ou 4,
**caractérisé en ce que** l'entrée d'agent réfrigérant (14) et la sortie d'agent réfrigérant (18) du dispositif récepteur (12) sont reliées à une zone d'agent réfrigérant fermée (34) du dispositif récepteur (32).

7. Dispositif (10) pour le service de passagers d'un avion selon l'une des revendications 1 à 6,
**caractérisé en ce qu'**un dispositif d'acheminement est aménagé dans la conduite de circuit d'agent réfrigérant (22) pour acheminer l'agent réfrigérant à travers celui-ci.

8. Dispositif (10) pour le service de passagers d'un avion selon l'une des revendications 1 à 7,
**caractérisé en ce que** le dispositif (27) pour le couplage thermique de l'agent réfrigérant traversant la conduite de circuit d'agent réfrigérant (22) avec le liquide frigoporteur traversant la conduite de circuit de liquide frigoporteur (28) d'un système de réfrigération central (30) de l'avion comporte un échangeur de chaleur.

9. Dispositif (10) pour le service de passagers d'un avion selon l'une des revendications 1 à 8,
**caractérisé en ce que** le dispositif (27) pour le couplage thermique de l'agent réfrigérant traversant la conduite de circuit d'agent réfrigérant (22) avec le liquide frigoporteur traversant la conduite de circuit de liquide frigoporteur (28) du système de réfrigération central (30) de l'avion est conçu pour établir une liaison directe entre la conduite de circuit d'agent réfrigérant (22) et la conduite de circuit de liquide frigoporteur (28) du système de réfrigération central (30) de l'avion.

10. Dispositif (10) pour le service de passagers d'un avion selon la revendication 9,
**caractérisé en ce que** le dispositif (27) pour le couplage thermique de l'agent réfrigérant traversant la conduite de circuit d'agent réfrigérant (22) avec le liquide frigoporteur traversant la conduite de circuit de liquide frigoporteur (28) du système de réfrigération central (30) de l'avion comporte une valve régulable qui, dans une première position, établit la liaison entre la conduite de circuit d'agent réfrigérant (22) et la conduite de circuit de liquide frigoporteur (28) du système de réfrigération central (30) de l'avion et, dans une deuxième position, interrompt la liaison établie entre la conduite de circuit d'agent réfrigérant (22) et la conduite de circuit de liquide frigoporteur (28) du système de réfrigération central (30) de l'avion.
